# EUROPEAN PATENT SPECIFICATION

(11) **EP 4 560 424 B1**
(45) Date of publication and mention of the grant of the patent: **22.04.2026**
(21) Application number: 23841753.9
(22) Date of filing: 01.03.2023
(51) Int. Cl.: G05D 1/689, G05D 1/225, G05D 1/606, G05D 105/80, G05D 107/70, G05D 109/25, G05D 1/65, B64U 101/26

(54) **ADAPTIVE ADJUSTMENT METHOD AND APPARATUS FOR FLIGHT PARAMETERS OF WIND TURBINE INSPECTION UNMANNED AERIAL VEHICLE, DEVICE, AND STORAGE MEDIUM**
VERFAHREN UND VORRICHTUNG ZUR ADAPTIVEN ANPASSUNG VON FLUGPARAMETERN EINER UNBEMANNTEN WINDTURBINENINSPEKTIONSLUFTFAHRZEUG, VORRICHTUNG UND SPEICHERMEDIUM
PROCÉDÉ ET APPAREIL DE RÉGLAGE ADAPTATIF POUR PARAMÈTRES DE VOL DE VÉHICULE AÉRIEN SANS PILOTE D'INSPECTION D'ÉOLIENNE, DISPOSITIF ET SUPPORT DE STOCKAGE

(30) Priority: 18.07.2022 CN 202210843042
(43) Date of publication of application: 28.05.2025
(73) Proprietor: Huaneng Clean Energy Research Institute, Beijing 102209 (CN)
(72) Inventor: WANG, Enmin, Beijing 102209 (CN); REN, Xin, Beijing 102209 (CN); WANG, Jianzhao, Beijing 102209 (CN); TONG, Tong, Beijing 102209 (CN); WANG, Hua, Beijing 102209 (CN); ZHAO, Pengcheng, Beijing 102209 (CN); DU, Jingyu, Beijing 102209 (CN); WEI, Angang, Beijing 102209 (CN)
(74) Representative: Metida
(86) International application number: PCT/CN2023/079046
(87) International publication number: WO 2024/016675

(56) References cited:
- CN-A- 101 620 278
- CN-A- 110 400 492
- CN-A- 111 344 651
- CN-A- 112 925 335
- CN-A- 112 947 511
- CN-A- 112 947 511
- CN-A- 113 485 453
- CN-A- 114 967 726
- US-A1- 2020 293 045

## Description

### TECHNICAL FIELD

The disclosure belongs to the technical field of unmanned aerial vehicles, and in particular relates to a self-adaptive adjustment method and device for flight parameters of an unmanned aerial vehicle for wind turbine inspection, and apparatus and storage medium.

### BACKGROUND

Wind power is a kind of clean energy. With the maturity of new energy technologies such as wind power, the corresponding power generation equipment is constantly upgraded, and a large number of wind turbine unit equipment has been put into use worldwide, which also puts forward higher requirements for the operation and maintenance of wind turbine unit and other related equipment. Due to regional factors, most wind farms are located in remote areas, and the wind turbines are scattered. The traditional manual inspection and operation of wind farms and wind turbine units has problems such as poor safety, heavy workload and low efficiency.

With the development of unmanned aerial vehicle (UAV) technology, UAV technology has been applied to many fields. At present, it has been recorded that using UAV to inspect wind turbine units can replace manual operation, and UAV inspection can realize high-altitude flight, long-distance and fast operation, which greatly improves the inspection efficiency.

The application of UAV has brought great convenience to wind turbine inspection. In the technical scheme of wind turbine inspection, UAV generates inspection routes in advance and fly according to the inspection routes, so as to complete the inspection of wind turbines and identify the abnormalities on the blades.

It should be noted that in the prior art, UAVs often fly according to the preset flight speed, that is to say, the flight speed of UAVs is always fixed from the beginning of inspection to the end of inspection. However, the control mode of this kind of UAV is not flexible enough, and it can only be inspected according to the preset flight speed. Considering the inspection efficiency, the worker often can only set the flight speed according to the lower limit that meets the standard, which leads to the low inspection efficiency of UAV.

US 2020/293045 A1 provides a drone (1) and method of autonomous navigation for tracking objects. The method uses computer vision and LiDAR sensors of the drone (1) and includes: detecting by both calibrated computer vision and LiDAR sensors at least an object to be tracked by the drone (1), measuring by the LiDAR sensor a set of features of the detected object, estimating a relative position of the drone (1) and the detected object; commanding the drone (1) to reach a target waypoint which belongs to a set of waypoints determining a trajectory, the set of waypoints being defined based on the measured features of the detected object and the estimated relative position; once the target waypoint is reached by the drone (1), adjusting the trajectory by redefining a next target waypoint from the set of waypoints to keep the detected object centered on the computer vision sensor.

CN112947511A provides a method for inspecting fan blades through an unmanned aerial vehicle. The method for inspecting the fan blades by the unmanned aerial vehicle comprises the following steps that: the unmanned aerial vehicle is controlled to fly along the blades according to a set cruise path, and photograph the blades according to a set photographing frequency; the unmanned aerial vehicle is instructed to send real-time flight parameters of the unmanned aerial vehicle and photos shot in real time to a ground workstation in the flight process; if an analysis result finds that an obvious defect exists and the photos completely meet a subsequent analysis requirement, only the obvious defect needs to be marked, the normal inspection and photographing process of the unmanned aerial vehicle is not interrupted, and the unmanned aerial vehicle continues to inspect and photograph; and if the analysis result indicates that the blades have a suspected defect, the ground workstation sends an alarm instruction to the unmanned aerial vehicle to instruct the unmanned aerial vehicle to hover on the spot and perform processing according to a preset program, or manual intervention is performed.

### SUMMARY

The purpose of the disclosure is to provide a self-adaptive adjustment method and device for flight parameters of an unmanned aerial vehicle for wind turbine inspection, and apparatus and storage medium, so as to solve the technical problem that in the prior art, the control mode of the unmanned aerial vehicle is not flexible enough, and the inspection can only be carried out according to the preset flight speed, but considering the inspection efficiency, workers often can only set the flight speed according to the lower limit meeting the standard, which leads to the low inspection efficiency of the unmanned aerial vehicle.

The invention is set out in the appended set of claims.

In order to achieve the above purpose, the disclosure adopts the following technical scheme.

According to the first aspect of the disclosure, a self-adaptive adjustment method for flight parameters of an unmanned aerial vehicle for wind turbine inspection is provided, and includes the following steps:
determining a wind turbine inspection route stage of the unmanned aerial vehicle being currently located during flight of the unmanned aerial vehicle, according to a real-time position of the unmanned aerial vehicle and a relative position relationship between the unmanned aerial vehicle and a wind turbine;
determining standard flight parameters according to the wind turbine inspection route stage of the unmanned aerial vehicle being currently located;
correcting the standard flight parameters based on actual flight parameters of the unmanned aerial vehicle to obtain corrected standard flight parameters for controlling flight of the unmanned aerial vehicle;
controlling the unmanned aerial vehicle to fly according to the corrected standard flight parameters in the wind turbine inspection route stage currently located.

In step of determining standard flight parameters according to the wind turbine inspection route stage of the unmanned aerial vehicle being currently located includes:
obtaining running speed parameters of wind turbine blades;
obtaining real-time electricity quantities of the unmanned aerial vehicle;
obtaining meteorological information of environment of the unmanned aerial vehicle being located;
determining the standard flight parameters according to the wind turbine inspection route stage currently located, the running speed parameters of the wind turbine blades, the real-time electricity quantities of the unmanned aerial vehicle and the meteorological information of environment of the unmanned aerial vehicle being located.

Compared with the prior art, the disclosure has the following beneficial effects.

A self-adaptive adjustment method of flight parameters of an unmanned aerial vehicle for wind turbine inspection is provided, a wind turbine inspection route stage of the unmanned aerial vehicle being currently located is determined during flight of the unmanned aerial vehicle, according to a real-time position of the unmanned aerial vehicle and a relative position relationship between the unmanned aerial vehicle and a wind turbine; standard flight parameters are determined according to the wind turbine inspection route stage of the unmanned aerial vehicle being currently located; real-time flight parameters of the unmanned aerial vehicle are corrected based on the standard flight parameters; the unmanned aerial vehicle is controlled to fly according to the corrected flight parameters in the wind turbine inspection route stage currently located. The flight parameters can be corrected according to the current wind turbine inspection route stage of the inspection unmanned aerial vehicle, so as to adapt to different route stages. It solves the technical problem that in the prior art, the control mode of the unmanned aerial vehicle is not flexible enough, and the inspection can only be carried out according to the preset flight speed, and considering the inspection efficiency, the worker often can only set the flight speed according to the lower limit meeting the standard, which leads to the low inspection efficiency of the unmanned aerial vehicle.

### BRIEF DESCRIPTION OF THE DRAWINGS

The accompanying drawings, which constitute a part of this disclosure, are used to provide a further understanding of this disclosure. The illustrative embodiments of this disclosure and their descriptions are used to explain this disclosure, and do not constitute undue limitations on this disclosure. In the attached drawings:
FIG. 1 is a flowchart of a self-adaptive adjustment method of flight parameters of an unmanned aerial vehicle for wind turbine inspection according to an embodiment of the disclosure;
FIG. 2 is a flowchart of an optional self-adaptive adjustment method of flight parameters of an unmanned aerial vehicle for wind turbine inspection according to an embodiment of the disclosure;
FIG. 3 is a schematic diagram of a self-adaptive adjustment device for flight parameters of an unmanned aerial vehicle for wind turbine inspection according to an embodiment of the disclosure;
FIG. 4 is a schematic diagram of an optional self-adaptive adjustment device for flight parameters of an unmanned aerial vehicle for wind turbine inspection according to an embodiment of the disclosure; and

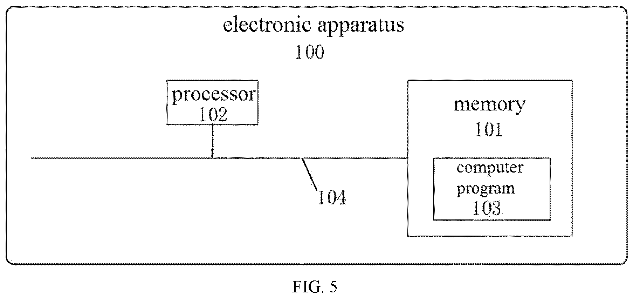

FIG. 5 is a structural block diagram of an electronic apparatus according to the disclosure.

### DETAILED DESCRIPTION OF THE EMBODIMENTS

In the following, the disclosure will be described in detail with reference to the attached drawings and embodiments. It should be noted that the embodiments in this disclosure and the features in the embodiments can be combined with each other without conflict.

The following detailed descriptions are exemplary descriptions and are intended to provide further detailed descriptions of this disclosure. Unless otherwise specified, all technical terms used in this disclosure have the same meaning as commonly understood by ordinary skilled in the field to which this disclosure belongs. The terminology used in this disclosure is only for describing specific embodiments, and is not intended to limit exemplary implementations according to this disclosure.

### Embodiment 1

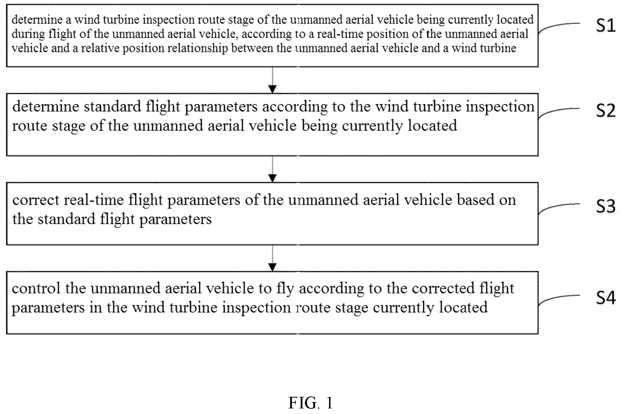

As shown in FIG. 1, Embodiment 1 of the disclosure provides a self-adaptive adjustment method of flight parameters of an unmanned aerial vehicle for wind turbine inspection, which includes the following steps.

Step S1, a wind turbine inspection route stage of the unmanned aerial vehicle being currently located is determined during flight of the unmanned aerial vehicle, according to a real-time position of the unmanned aerial vehicle and a relative position relationship between the unmanned aerial vehicle and a wind turbine.

In this step S1, the controller of the UAV or other hardware equipment with data processing function can be used as the executive body of the method in this scheme, and the whole process of the wind turbine inspection can be carried out in the UAV, this scheme can first determine the real-time position of the UAV and the relative position relationship between the UAV and the wind turbine, such as the UAV is on the front or back of the wind turbine hub or directly above the aircraft cabin, and then based on the real-time position of the UAV and the relative position relationship between the UAV and the wind turbine, which route stage the UAV is in the wind turbine inspection is determined.

What needs to be explained here is that the route stage of the wind turbine inspection can include any stage of the whole process of taking off, inspection and returning from the UAV.

As a specific example of the above steps, the route stage includes one or more: take-off stage, wind turbine measurement stage, inspection stage and return stage. This scheme can dynamically and self-adaptively adjust the flight parameters of the UAV after identifying which route stage the UAV is in the wind turbine inspection. In a more specific example, in the take-off stage, the UAV only needs to fly from the take-off position to the target position, and the flight speed can be 8m/s. In the wind turbine measurement stage and inspection stage, the wind turbine needs to open the image acquisition module on the one hand, and on the other hand, it needs to fly slowly, with the flight speed of 1m/s because it is close to the wind turbine and needs to avoid an accident caused by sudden change in the wind turbine yaw angle. In the return stage, the flight speed of the unmanned aerial vehicle can be 8 m/s. In this way, the UAV can be safely and quickly completed in the whole process of wind turbine inspection.

Step S2, standard flight parameters are determined according to the wind turbine inspection route stage of the unmanned aerial vehicle being currently located.

In this step S2, the above standard flight parameters can be standard flight speeds, that is, there is a standard flight speed corresponding to each different wind turbine inspection route stage. This scheme can determine which wind turbine inspection route stage the UAV is in and then match it to obtain the corresponding standard flight speed.

It should be noted here that the standard flight parameters can be standard flight speed or other flight parameters such as flight attitude.

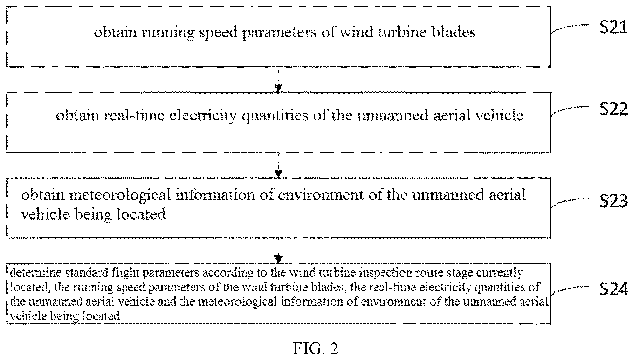

As shown in FIG. 2, this step S2 of determining standard flight parameters according to the wind turbine inspection route stage of the unmanned aerial vehicle being currently located specifically includes the following steps:
step S21: running speed parameters of wind turbine blades are obtained;
step S22: real-time electricity quantities of the unmanned aerial vehicle are obtained;
step S23: meteorological information of environment of the unmanned aerial vehicle being located is obtained;
step S24: standard flight parameters are determined according to the wind turbine inspection route stage currently located, the running speed parameters of the wind turbine blades, the real-time electricity quantities of the unmanned aerial vehicle and the meteorological information of environment of the unmanned aerial vehicle being located.

As a specific example of the above steps, in this scheme, the standard flight parameters can be determined by integrating the running speed parameters of the wind turbine blades, the real-time electricity quantities of the UAV, the meteorological information of the environment where the UAV is located and the wind turbine inspection route stage currently located, so that the corrected flight parameters of the UAV are more in line with the scene where the UAV is located. In a more specific example, if the wind turbine blades are running at a faster speed at this time, the speed of the UAV can be lowered to ensure the safety of the UAV in the inspection stage. Or in the return stage of the UAV, if the electricity quantity threshold of the UAV is low at this time, this scheme will speed up the flight speed of the UAV, or in the sudden change of weather, such as foggy weather, this scheme will reduce the flight speed of the UAV to avoid safety accidents.

Step S3, real-time flight parameters of the unmanned aerial vehicle are corrected based on the standard flight parameters to obtain final flight parameters for controlling flight of the unmanned aerial vehicle.

As an exemplary explanation, after the standard flight speed is obtained, the real-time flight parameters of the UAV can be corrected according to the standard flight parameters according to the preset correction method.

Optionally, in step S3 of correcting real-time flight parameters of the unmanned aerial vehicle based on the standard flight parameters includes:
step S31, the real-time flight parameters are adjusted into the standard flight parameters according to a preset speed change.

As a specific example of the above steps, in this scheme, after determining the standard flight parameters, the UAV is not directly controlled to fly according to the standard flight parameters, but the real-time flight parameters are adjusted to the standard flight parameters slowly and regularly according to the preset speed change. In this way, it is possible to prevent the sudden increase or decrease of speed from easily causing safety accidents when the standard flight parameters are too different from the real-time flight parameters.

Step S4, the unmanned aerial vehicle is controlled to fly according to the corrected flight parameters in the wind turbine inspection route stage of currently located.

What needs to be explained here is that through the above steps, this scheme determines the route stage where the UAV is located according to the real-time position of the UAV, and self-adaptively adjusts the flight parameters of the UAV according to the route stage where the UAV is located. Because the UAV does not need to fly slowly in some route stages, the flight speed in the route stage that does not need to fly slowly can be increased, and the flight speed in the route stage that needs to fly slowly can be reduced. Therefore, this scheme solves the technical problem that the control mode of the unmanned aerial vehicle in the prior art is not flexible enough, and the inspection can only be carried out according to the preset flight speed, and considering the inspection efficiency, the worker often can only set the flight speed according to the lower limit meeting the standard, which leads to the low inspection efficiency of the unmanned aerial vehicle.

### Embodiment 2

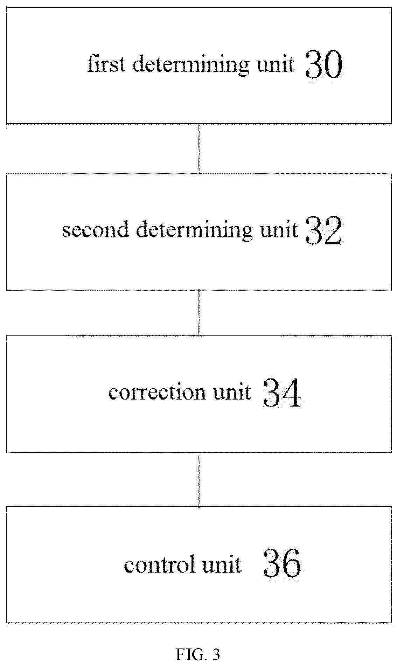

As shown in FIG. 3, Embodiment 2 of the disclosure further provides a self-adaptive adjustment device for flight parameters of an unmanned aerial vehicle for wind turbine inspection, which includes:
a first determining unit 30, configured to determine a wind turbine inspection route stage of the unmanned aerial vehicle being currently located according to a real-time position of the unmanned aerial vehicle and a relative position relationship between the unmanned aerial vehicle and a wind turbine during flight of the unmanned aerial vehicle;
a second determining unit 32, configured to determine standard flight parameters according to the wind turbine inspection route stage of the unmanned aerial vehicle being currently located;
a correction unit 34, configured to correct the real-time flight parameters of the unmanned aerial vehicle based on the standard flight parameters to obtain final flight parameters for controlling flight of the unmanned aerial vehicle.
a control unit 36, configured to control the unmanned aerial vehicle to fly according to the corrected flight parameters in the wind turbine inspection route stage currently located.

When applied to the embodiment of the disclosure, in the whole process that the UAV performs the wind turbine inspection, the scheme can first determine the real-time position of the UAV and the relative position relationship between the UAV and the wind turbine, such as the drone is located on the front and back of the wind turbine hub or directly above the aircraft cabin, and then determine which route stage the drone is in the wind turbine inspection based on the real-time position of the UAV and the relative position relationship between the UAV and the wind turbine. What needs to be explained here is that the wind turbine inspection route stage can include any stage of the whole process of taking off, inspection and returning from the drone. The above standard flight parameters can be standard flight speeds, that is, there is a standard flight speed corresponding to each different wind turbine inspection route stage. This scheme can determine which wind turbine inspection route stage the UAV is in and then match it to obtain the corresponding standard flight speed. It should be noted here that the standard flight parameters can be standard flight speed or other flight parameters such as flight attitude. After the standard flight speed is obtained, the real-time flight parameters of the UAV can be corrected according to the standard flight parameters according to the preset correction method.

Through the above aspects, this scheme determines the route stage where the UAV is located according to the real-time position of the UAV, and self-adaptively adjusts the flight parameters of the UAV according to the route stage where the UAV is located. Because the UAV does not need to fly slowly in some route stages, the flight speed in the route stage that does not need to fly slowly can be increased, and the flight speed in the route stage that needs to fly slowly can be reduced. Therefore, this scheme solves the technical problem that in the prior art, the control mode of the unmanned aerial vehicle is not flexible enough, and the inspection can only be carried out according to the preset flight speed, and considering the inspection efficiency, the worker often can only set the flight speed according to the lower limit meeting the standard, which leads to the low inspection efficiency of the unmanned aerial vehicle.

Optionally, the route stage may include a takeoff stage, a wind turbine measurement stage, an inspection stage, and a return stage.

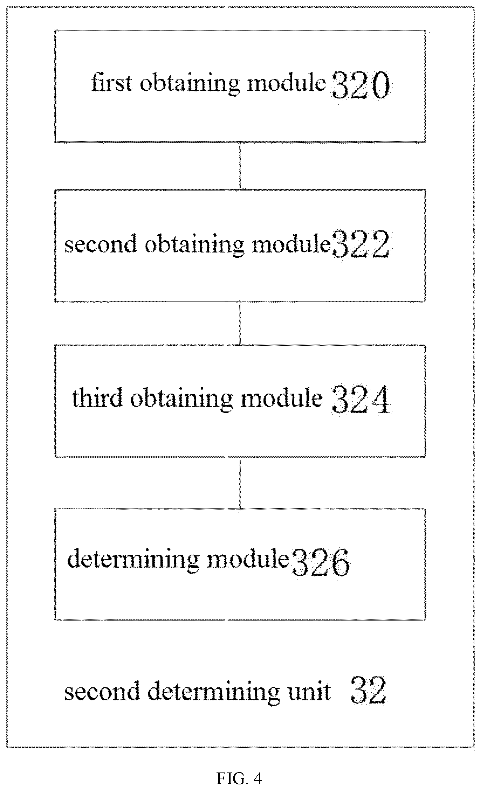

As shown in FIG. 4, the second determining unit 32 may include the following:
a first obtaining module 320, configured to obtain running speed parameters of wind turbine blades;
a second obtaining module 322, configured to obtain real-time electricity quantities of the unmanned aerial vehicle;
a third obtaining module 324, configured to obtain meteorological information of environment of the unmanned aerial vehicle being located;
a determining module 326, configured to determine standard flight parameters according to the wind turbine inspection route stage currently located, the running speed parameters of the wind turbine blades, the real-time electricity quantities of the unmanned aerial vehicle and the meteorological information of environment of the unmanned aerial vehicle being located.

Optionally, the correction unit includes: an adjusting module, configured to adjust the real-time flight parameters into the standard flight parameters according to a preset speed change.

### Embodiment 3

The disclosure also provides an electronic apparatus 100 for realizing the the self-adaptive adjustment method of flight parameters of an unmanned aerial vehicle for wind turbine inspection in the above embodiment. The electronic apparatus 100 includes a memory 101, at least one processor 102, a computer program 103 stored in the memory 101 and executable on the at least one processor 102, and at least one communication bus 104. The memory 101 can be used to store a computer program 103, and the processor 102 runs or executes the computer program stored in the memory 101, and calls the data stored in the memory 101 to realize the steps of the self-adaptive adjustment method of flight parameters of an unmanned aerial vehicle for wind turbine inspection in the first Embodiment 1. The memory 101 may mainly include a storage program area and a storage data area, where the storage program area may store an operating system, application programs required by at least one function (such as sound playing function, image playing function, etc.); the storage data area may store data (such as audio data) created according to the use of the electronic apparatus 100 and the like. In addition, the memory 101 may include a nonvolatile memory, such as a hard disk, a memory, a plug-in hard disk, a smart media card (SMC), a secure digital (SD) card, a flash card, at least one disk memory part, a flash memory part, or other nonvolatile solid-state memory part.

At least one processor 102 may be a central processing unit (CPU), may also be other general processors, digital signal processor (DSP), application specific integrated circuits (ASIC), field-programmable gate array (FPGA) or other programmable logic part, discrete gate or transistor logic devices, discrete hardware components, etc. The processor 102 can be a microprocessor, or the processor 102 can also be any conventional processor, etc. The processor 102 is the control center of the electronic apparatus 100, and connects various parts of the electronic apparatus 100 with various interfaces and lines.

The memory 101 in the electronic apparatus 100 stores a plurality of instructions to realize the self-adaptive adjustment method of flight parameters of an unmanned aerial vehicle for wind turbine inspection, and the processor 102 can execute the plurality of instructions to realize the following:
a wind turbine inspection route stage of the unmanned aerial vehicle being currently located is determined during flight of the unmanned aerial vehicle, according to a real-time position of the unmanned aerial vehicle and a relative position relationship between the unmanned aerial vehicle and a wind turbine;
standard flight parameters are determined according to the wind turbine inspection route stage of the unmanned aerial vehicle being currently located;
real-time flight parameters of the unmanned aerial vehicle are corrected based on the standard flight parameters;
the unmanned aerial vehicle is controlled to fly according to the corrected flight parameters in the wind turbine inspection route stage currently located.

### Embodiment 4

The integrated modules/units of the electronic apparatus 100 can be stored in a computer-readable storage medium if they are implemented in the form of software functional units and sold or used as independent products. Based on this understanding, the disclosure can realize all or part of the processes in the methods of the above-mentioned embodiments, and can also instruct related hardware through a computer program, computer program can be stored in a computer-readable storage medium, and when the computer program is executed by a processor, can realize the each step of the above method embodiment. Where, the computer program includes computer program code, which can be in the form of source code, object code, executable file or some intermediate form. Computer-readable media can include any entity or device capable of carrying computer program codes, recording media, U disk, mobile hard disk, magnetic disk, optical disk, computer memory and read-only memory.

It should be understood by those skilled in the art that embodiments of the disclosure can be provided as a method, a system, or a computer program product. Therefore, this disclosure can take the form of an entirely hardware embodiment, an entirely software embodiment, or an embodiment combining software and hardware aspects. Moreover, this disclosure can take the form of a computer program product implemented on one or more computer-usable storage media (including but not limited to disk storage, CD-ROM, optical storage, etc.) containing computer-usable program codes.

The disclosure is described with reference to flowcharts and/or block diagrams of methods, devices (systems), and computer program products according to embodiments of the disclosure. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in one or more flows in the flowchart and/or one or more blocks in the block diagram.

These computer program instructions may also be stored in a computer-readable memory that can direct a computer or other programmable data processing apparatus to work in a particular manner, such that the instructions stored in the computer-readable memory produce an article of manufacture including instruction means. The instruction means implements the functions specified in one or more flows in the flowchart and/or one or more blocks in the block diagram.

These computer program instructions can also be loaded onto a computer or other programmable data processing device, so that a series of operational steps are performed on the computer or other programmable device to produce computer-implemented processes, so that the instructions executed on the computer or other programmable device provide steps for implementing the functions specified in one or more flows in the flowchart and/or one or more blocks in the block diagrams.

## Claims

1. A self-adaptive adjustment method of flight parameters of an unmanned aerial vehicle for wind turbine inspection, comprising:
determining (S1) a wind turbine inspection route stage of the unmanned aerial vehicle being currently located during flight of the unmanned aerial vehicle, according to a real-time position of the unmanned aerial vehicle and a relative position relationship between the unmanned aerial vehicle and a wind turbine;
determining (S2) standard flight parameters according to the wind turbine inspection route stage of the unmanned aerial vehicle being currently located; and
correcting (S3) the standard flight parameters based on actual flight parameters of the unmanned aerial vehicle to obtain corrected standard flight parameters for controlling flight of the unmanned aerial vehicle;
**characterized in that** determining (S2) the standard flight parameters comprises:
obtaining (S21) running speed parameters of wind turbine blades;
obtaining (S22) real-time electricity quantities of the unmanned aerial vehicle;
obtaining (S23) meteorological information of environment of the unmanned aerial vehicle being located; and
determining (S24) the standard flight parameters according to the wind turbine inspection route stage currently located, the running speed parameters of the wind turbine blades, the real-time electricity quantities of the unmanned aerial vehicle and the meteorological information of environment of the unmanned aerial vehicle being located.

2. The self-adaptive adjustment method of flight parameters of an unmanned aerial vehicle for wind turbine inspection according to claim 1, wherein in determining (S1) the wind turbine inspection route stage, the wind turbine inspection route stage comprises one or more of a take-off stage, a wind turbine measurement stage, an inspection stage and a return stage.

3. The self-adaptive adjustment method of flight parameters of an unmanned aerial vehicle for wind turbine inspection according to claim 1, wherein correcting (S3) the standard flight parameters comprises:
correcting the standard flight parameters to the corrected standard flight parameters according to a preset speed change.

4. A self-adaptive adjustment device for flight parameters of an unmanned aerial vehicle for wind turbine inspection, comprising:
a first determining unit (30), configured to determine a wind turbine inspection route stage of the unmanned aerial vehicle being currently located according to a real-time position of the unmanned aerial vehicle and a relative position relationship between the unmanned aerial vehicle and a wind turbine during flight of the unmanned aerial vehicle;
a second determining unit (32), configured to determine standard flight parameters according to the wind turbine inspection route stage of the unmanned aerial vehicle being currently located; and
a correction unit (34), configured to correct the standard flight parameters based on actual flight parameters of the unmanned aerial vehicle to obtain corrected standard flight parameters for controlling flight of the unmanned aerial vehicle;
**characterized in that** the second determining unit (32) comprises:
a first obtaining module (320), configured to obtain running speed parameters of wind turbine blades;
a second obtaining module (322), configured to obtain real-time electricity quantities of the unmanned aerial vehicle;
a third obtaining module (324), configured to obtain meteorological information of environment of the unmanned aerial vehicle being located; and
a determining module (326), configured to determine the standard flight parameters according to the wind turbine inspection route stage currently located, the running speed parameters of the wind turbine blades, the real-time electricity quantities of the unmanned aerial vehicle and the meteorological information of environment of the unmanned aerial vehicle being located.

5. The self-adaptive adjustment device for flight parameters of an unmanned aerial vehicle for wind turbine inspection according to claim 4, wherein the wind turbine inspection route stage comprises one or more of a takeoff stage, a wind turbine measurement stage, an inspection stage and a return stage.

6. The self-adaptive adjustment device for flight parameters of an unmanned aerial vehicle for wind turbine inspection according to claim 4, wherein the correction unit comprises:
an adjusting module, configured to correct the standard flight parameters to the corrected standard flight parameters according to a preset speed change.

7. An electronic apparatus (100), comprising a processor (102) and a memory (101), wherein the processor (102) is used for executing a computer program (103) stored in the memory (101) to realize the self-adaptive adjustment method of flight parameters of an unmanned aerial vehicle for wind turbine inspection according to any one of claims 1 to 3.

8. A computer-readable storage medium, wherein at least one instruction is stored in the computer-readable storage medium, and when the at least one instruction is executed by a processor (102), the self-adaptive adjustment method of flight parameters of an unmanned aerial vehicle for wind turbine inspection according to any one of claims 1 to 3 is realized.

## Patentansprüche

1. Ein Verfahren zur adaptiven Anpassung von Flugparametern eines unbemannten Windturbineninspektionsluftfahrzeugs, umfassend:
Bestimmen (S1) einer Windturbineninspektionsroutenphase, in der sich das unbemannte Luftfahrzeug aktuell befindet, während des Flugs des unbemannten Luftfahrzeugs, gemäß einer Echtzeitposition des unbemannten Luftfahrzeugs und einer relativen Positionsbeziehung zwischen dem unbemannten Luftfahrzeug und einer Windturbine;
Bestimmen (S2) von Standardflugparametern gemäß der
Windturbineninspektionsroutenphase, in der sich das unbemannte Luftfahrzeug aktuell befindet; und
Korrigieren (S3) der Standardflugparameter basierend auf tatsächlichen Flugparametern des unbemannten Luftfahrzeugs, um korrigierte Standardflugparameter zum Steuern des Flugs des unbemannten Luftfahrzeugs zu erhalten;
**dadurch gekennzeichnet, dass** das Bestimmen (S2) der Standardflugparameter Folgendes umfasst:
Erhalten (S21) von Laufgeschwindigkeitsparametern von Windturbinenblättern;
Erhalten (S22) von Echtzeit-Elektrizitätsmengen des unbemannten Luftfahrzeugs;
Erhalten (S23) von meteorologischen Informationen der Umgebung, in der sich das unbemannte Luftfahrzeug befindet; und
Bestimmen (S24) der Standardflugparameter gemäß der aktuell vorliegenden Windturbineninspektionsroutenphase, den Laufgeschwindigkeitsparametern der Windturbinenblätter, den Echtzeit-Elektrizitätsmengen des unbemannten Luftfahrzeugs und den meteorologischen Informationen der Umgebung, in der sich das unbemannte Luftfahrzeug befindet.

2. Das Verfahren zur adaptiven Anpassung von Flugparametern eines unbemannten Luftfahrzeugs für die Windturbineninspektion nach Anspruch 1, wobei beim Bestimmen (S1) der Windturbineninspektionsroutenphase die Windturbineninspektionsroutenphase eine oder mehrere der folgenden Phasen umfasst: eine Startphase, eine Windturbinenmessphase, eine Inspektionsphase und eine Rückkehrphase.

3. Das Verfahren zur adaptiven Anpassung von Flugparametern eines unbemannten Luftfahrzeugs für die Windturbineninspektion nach Anspruch 1, wobei das Korrigieren (S3) der Standardflugparameter Folgendes umfasst:
Korrigieren der Standardflugparameter zu den korrigierten Standardflugparametern gemäß einer voreingestellten Geschwindigkeitsänderung.

4. Eine Vorrichtung zur adaptiven Anpassung von Flugparametern eines unbemannten Luftfahrzeugs für die Windturbineninspektion, umfassend:
eine erste Bestimmungseinheit (30), die dazu konfiguriert ist, eine Windturbineninspektionsroutenphase, in der sich das unbemannte Luftfahrzeug aktuell befindet, gemäß einer Echtzeitposition des unbemannten Luftfahrzeugs und einer relativen Positionsbeziehung zwischen dem unbemannten Luftfahrzeug und einer Windturbine während des Flugs des unbemannten Luftfahrzeugs zu bestimmen;
eine zweite Bestimmungseinheit (32), die dazu konfiguriert ist, Standardflugparameter gemäß der Windturbineninspektionsroutenphase, in der sich das unbemannte Luftfahrzeug aktuell befindet, zu bestimmen; und
eine Korrektureinheit (34), die dazu konfiguriert ist, die Standardflugparameter basierend auf tatsächlichen Flugparametern des unbemannten Luftfahrzeugs zu korrigieren, um korrigierte Standardflugparameter zum Steuern des Flugs des unbemannten Luftfahrzeugs zu erhalten;
**dadurch gekennzeichnet, dass** die zweite Bestimmungseinheit (32) Folgendes umfasst:
ein erstes Modul (320) zum Erhalten, das dazu konfiguriert ist, Laufgeschwindigkeitsparameter von Windturbinenblättern zu erhalten;
ein zweites Modul (322) zum Erhalten, das dazu konfiguriert ist, Echtzeit-Elektrizitätsmengen des unbemannten Luftfahrzeugs zu erhalten;
ein drittes Modul (324) zum Erhalten, das dazu konfiguriert ist, meteorologische Informationen der Umgebung, in der sich das unbemannte Luftfahrzeug befindet, zu erhalten; und
ein Bestimmungsmodul (326), das dazu konfiguriert ist, die Standardflugparameter gemäß der aktuell vorliegenden Windturbineninspektionsroutenphase, den Laufgeschwindigkeitsparametern der Windturbinenblätter, den Echtzeit-Elektrizitätsmengen des unbemannten Luftfahrzeugs und den meteorologischen Informationen der Umgebung, in der sich das unbemannte Luftfahrzeug befindet, zu bestimmen.

5. Die Vorrichtung zur adaptiven Anpassung von Flugparametern eines unbemannten Luftfahrzeugs für die Windturbineninspektion nach Anspruch 4, wobei die Windturbineninspektionsroutenphase eine oder mehrere der folgenden Phasen umfasst: eine Startphase, eine Windturbinenmessphase, eine Inspektionsphase und eine Rückkehrphase.

6. Die Vorrichtung zur adaptiven Anpassung von Flugparametern eines unbemannten Luftfahrzeugs für die Windturbineninspektion nach Anspruch 4, wobei die Korrektureinheit Folgendes umfasst:
ein Anpassungsmodul, das dazu konfiguriert ist, die Standardflugparameter gemäß einer voreingestellten Geschwindigkeitsänderung zu den korrigierten Standardflugparametern zu korrigieren.

7. Eine elektronische Vorrichtung (100), umfassend einen Prozessor (102) und einen Speicher (101), wobei der Prozessor (102) dazu verwendet wird, ein im Speicher (101) gespeichertes Computerprogramm (103) auszuführen, um das Verfahren zur adaptiven Anpassung von Flugparametern eines unbemannten Luftfahrzeugs für die Windturbineninspektion nach einem der Ansprüche 1 bis 3 zu realisieren.

8. Ein computerlesbares Speichermedium, wobei mindestens eine Anweisung in dem computerlesbaren Speichermedium gespeichert ist, und wenn die mindestens eine Anweisung durch einen Prozessor (102) ausgeführt wird, das Verfahren zur adaptiven Anpassung von Flugparametern eines unbemannten Luftfahrzeugs für die Windturbineninspektion nach einem der Ansprüche 1 bis 3 realisiert wird.

## Revendications

1. Un procédé de réglage adaptatif de paramètres de vol d'un véhicule aérien sans pilote pour l'inspection d'une éolienne, comprenant:
la détermination (S1) d'une étape d'itinéraire d'inspection d'éolienne où le véhicule aérien sans pilote est actuellement situé durant le vol du véhicule aérien sans pilote, selon une position en temps réel du véhicule aérien sans pilote et une relation de position relative entre le véhicule aérien sans pilote et une éolienne;
la détermination (S2) de paramètres de vol standards selon l'étape d'itinéraire d'inspection d'éolienne où le véhicule aérien sans pilote est actuellement situé; et
la correction (S3) des paramètres de vol standards sur la base de paramètres de vol réels du véhicule aérien sans pilote pour obtenir des paramètres de vol standards corrigés pour commander le vol du véhicule aérien sans pilote;
**caractérisé en ce que** la détermination (S2) des paramètres de vol standards comprend:
l'obtention (S21) de paramètres de vitesse de fonctionnement de pales d'éolienne;
l'obtention (S22) de quantités d'électricité en temps réel du véhicule aérien sans pilote;
l'obtention (S23) d'informations météorologiques de l'environnement où le véhicule aérien sans pilote est situé; et
la détermination (S24) des paramètres de vol standards selon l'étape d'itinéraire d'inspection d'éolienne actuellement localisée, les paramètres de vitesse de fonctionnement des pales d'éolienne, les quantités d'électricité en temps réel du véhicule aérien sans pilote et les informations météorologiques de l'environnement où le véhicule aérien sans pilote est situé.

2. Le procédé de réglage adaptatif de paramètres de vol d'un véhicule aérien sans pilote pour l'inspection d'éolienne selon la revendication 1, dans lequel lors de la détermination (S1) de l'étape d'itinéraire d'inspection d'éolienne, l'étape d'itinéraire d'inspection d'éolienne comprend une ou plusieurs étapes parmi une étape de décollage, une étape de mesure d'éolienne, une étape d'inspection et une étape de retour.

3. Le procédé de réglage adaptatif de paramètres de vol d'un véhicule aérien sans pilote pour l'inspection d'éolienne selon la revendication 1, dans lequel la correction (S3) des paramètres de vol standards comprend:
la correction des paramètres de vol standards en paramètres de vol standards corrigés selon un changement de vitesse prédéfini.

4. Un dispositif de réglage adaptatif pour des paramètres de vol d'un véhicule aérien sans pilote pour l'inspection d'éolienne, comprenant:
une première unité de détermination (30), configurée pour déterminer une étape d'itinéraire d'inspection d'éolienne où le véhicule aérien sans pilote est actuellement situé selon une position en temps réel du véhicule aérien sans pilote et une relation de position relative entre le véhicule aérien sans pilote et une éolienne durant le vol du véhicule aérien sans pilote;
une seconde unité de détermination (32), configurée pour déterminer des paramètres de vol standards selon l'étape d'itinéraire d'inspection d'éolienne où le véhicule aérien sans pilote est actuellement situé; et
une unité de correction (34), configurée pour corriger les paramètres de vol standards sur la base de paramètres de vol réels du véhicule aérien sans pilote pour obtenir des paramètres de vol standards corrigés pour commander le vol du véhicule aérien sans pilote;
**caractérisé en ce que** la seconde unité de détermination (32) comprend:
un premier module d'obtention (320), configuré pour obtenir des paramètres de vitesse de fonctionnement de pales d'éolienne;
un second module d'obtention (322), configuré pour obtenir des quantités d'électricité en temps réel du véhicule aérien sans pilote;
un troisième module d'obtention (324), configuré pour obtenir des informations météorologiques de l'environnement où le véhicule aérien sans pilote est situé; et
un module de détermination (326), configuré pour déterminer les paramètres de vol standards selon l'étape d'itinéraire d'inspection d'éolienne actuellement localisée, les paramètres de vitesse de fonctionnement des pales d'éolienne, les quantités d'électricité en temps réel du véhicule aérien sans pilote et les informations météorologiques de l'environnement où le véhicule aérien sans pilote est situé.

5. Le dispositif de réglage adaptatif pour des paramètres de vol d'un véhicule aérien sans pilote pour l'inspection d'éolienne selon la revendication 4, dans lequel l'étape d'itinéraire d'inspection d'éolienne comprend une ou plusieurs étapes parmi une étape de décollage, une étape de mesure d'éolienne, une étape d'inspection et une étape de retour.

6. Le dispositif de réglage adaptatif pour des paramètres de vol d'un véhicule aérien sans pilote pour l'inspection d'éolienne selon la revendication 4, dans lequel l'unité de correction comprend:
un module de réglage, configuré pour corriger les paramètres de vol standards en paramètres de vol standards corrigés selon un changement de vitesse prédéfini.

7. Un appareil électronique (100), comprenant un processeur (102) et une mémoire (101), dans lequel le processeur (102) est utilisé pour exécuter un programme informatique (103) stocké dans la mémoire (101) pour réaliser le procédé de réglage adaptatif de paramètres de vol d'un véhicule aérien sans pilote pour l'inspection d'éolienne selon l'une quelconque des revendications 1 à 3.

8. Un support de stockage lisible par ordinateur, dans lequel au moins une instruction est stockée dans le support de stockage lisible par ordinateur, et lorsque ladite au moins une instruction est exécutée par un processeur (102), le procédé de réglage adaptatif de paramètres de vol d'un véhicule aérien sans pilote pour l'inspection d'éolienne selon l'une quelconque des revendications 1 à 3 est réalisé.
